# EUROPEAN PATENT APPLICATION

(11) **EP 4 119 263 A1**
(43) Date of publication of application: **18.01.2023**
(21) Application number: 20924892.1
(22) Date of filing: 09.09.2020
(51) Int. Cl.: B22F 3/105, B22F 3/16, B28B 1/30, B33Y 10/00, B33Y 30/00, B33Y 50/02, B29C 64/153, B29C 64/268, B29C 64/393

(54) **ADDITIVE MODELING DEVICE AND METHOD FOR CONTROLLING ADDITIVE MODELING DEVICE**

(30) Priority: 13.03.2020 JP 2020043883
(71) Applicant: Hitachi, Ltd., Tokyo 100-8280 (JP)
(72) Inventor: ONUMA, Atsuhiko, Tokyo 100-8280 (JP); SAITOU, Noboru, Tokyo 100-8280 (JP); KAWANAKA, Hirotsugu, Tokyo 100-8280 (JP); YANG, Yingjuan, Tokyo 100-8280 (JP)
(74) Representative: Strehl Schübel-Hopf & Partner
(86) International application number: PCT/JP2020/034127
(87) International publication number: WO 2021/181727

(57) **Abstract**

A powder supply device that supplies metal powder 2 to a modeling surface 4, laser systems 30 and 40 that melt the metal powder 2 at a predetermined position in the metal powder 2 supplied to the modeling surface 4, first thermometers 36 and 46 and a second thermometer 50 that measure a temperature change in each region of the modeling surface 4, and a control device 70 that controls the laser systems 30 and 40 are provided. The control device 70 determines a laser irradiation condition for a next layer, based on the temperature change after beam irradiation of the modeling surface 4. Thus, there are provided an additive modeling apparatus and a method of controlling the additive modeling apparatus capable of making the modeling quality of the entire modeled object uniform regardless of the shape of the modeled object.

## Description

### Technical Field

The present invention relates to an additive modeling apparatus and a method of controlling an additive modeling apparatus.

### Background Art

Three-dimensional additive modeling techniques enable production of a product having a complicated shape, which has been impossible with the conventional processing technique such as cutting, and is expected to be applied in various fields. In recent years, various examinations have also been performed on an additive modeling method using powder.

As a method of additive modeling, for example, a metal deposition method and a powder bed fusion method (powder bed method) are known.

In the metal deposition method, an additive modeled object is obtained by repeating a step of forming a modeled layer by supplying a heated melt of metal powder to a predetermined position and then solidifying the heated melt.

In the powder bed method, a thin powder layer is formed in a manner that metal powder is thinly spread on a base plate with a recoater or the like in accordance with predetermined modeling conditions (a beam irradiation condition, a thickness of a powder layer, and the like), based on slice data of a modeled object. Then, the powder layer is selectively melted by irradiating powder at a portion corresponding to the modeled object portion with a beam (for example, a laser beam or an electron beam). Then, the melting is stopped and coagulation is performed. Then, a three-dimensional modeled object is completed by repeated each of an operation of forming the powder layer and an operation of solidification by the beam irradiation.

As an example of a device for additive manufacturing of the powder bed method, PTL 1 discloses as follows. In PTL 1, a powder delivery mechanism, a powder recoating mechanism, an irradiation beam directing mechanism, a temperature control mechanism that measures a real-time temperature of a growing portion of a target object, a construction unit, a positioning mechanism, and a rotation mechanism are provided. The construction unit is attached to the positioning mechanism that provides the construction unit with independent motions in at least two dimensions. The construction unit is also attached to the rotation mechanism to rotate around and over a construction platform during manufacturing. In addition, PTL 1 includes a cycle of repeating a step of depositing powder on the construction platform, a step of forming a fused layer by irradiating a selected portion of the powder, and a step of measuring a real-time temperature of a selected portion of the fused layer.

### Citation List

### Patent Literature

PTL 1: JP 2019-073796 A

### Summary of Invention

### Technical Problem

In the three-dimensional additive modeling technique, there is a problem that the quality of the modeled object is not uniform.

As a result of intensive examinations by the present inventors, it has become apparent that the state of heat dissipation varies for each region depending on the size of a laser irradiation region, a shape of a modeled object, and the quality of heat conduction, due to the shape and the like of the modeled object even under the same modeling condition, so that an excessive melting portion and an insufficient melting portion occur in one article.

More specifically, for example, even in one layer, the laser irradiation diameter may vary between a complicated shape portion and a portion subjected to uniform modeling. Here, when these portions are compared with each other, it has become apparent that there is a problem that the amount of heat applied is different and the thermal conductivity (ease of escape of generated heat) is also different due to the shape and joining with the lower surface, so the quality of the modeled object obtained as a modeling result is different due to a difference in a heat history.

For example, in the technique disclosed in PTL 1, when the temperature of the growth portion is high, the modeling accuracy is improved by measuring the temperature of a fused portion in real time, such as reducing a laser output and reducing the accumulation of heat, and calculating the size based on the measured temperature. However, since the temperature of the fused portion (molten pool portion) is measured, heat dissipation is not considered.

Further, in the technique disclosed in PTL 1, feedback control is performed by measuring the temperature of the molten pool, but the feedback control is not reflected in the subsequent layers.

The present invention has been made in view of such a problem, and an object thereof is to provide an additive modeling apparatus and a method of controlling the additive modeling apparatus capable of making the modeling quality of the entire modeled object uniform regardless of the shape of the modeled object.

### Solution to Problem

The present invention includes plural pieces of means for solving the above problems. According to an example of the present invention, an additive modeling apparatus includes a powder supply device that supplies powder to a modeling surface, a beam irradiation device that melts powder at a predetermined position in the powder supplied to the modeling surface, a temperature measurement device that measures a temperature change in each region of the modeling surface, and a control device that controls the beam irradiation device. The control device determines a beam irradiation condition for a next layer, based on the temperature change after beam irradiation of the modeling surface.

### Advantageous Effects of Invention

According to the present disclosure, in additive modeling, it is possible to make the modeling quality of the entire modeled object, uniform regardless of the shape of the modeled object. Objects, configurations, and effects other than those described above will be clarified by the descriptions of the following embodiments.

### Brief Description of Drawings

[FIG. 1] FIG. 1 is a schematic diagram illustrating a configuration of an additive modeling apparatus according to an embodiment of the present invention.
[FIG. 2] FIG. 2 is a flowchart illustrating a flow of control of the additive modeling apparatus in the embodiment of the present invention.

### Description of Embodiments

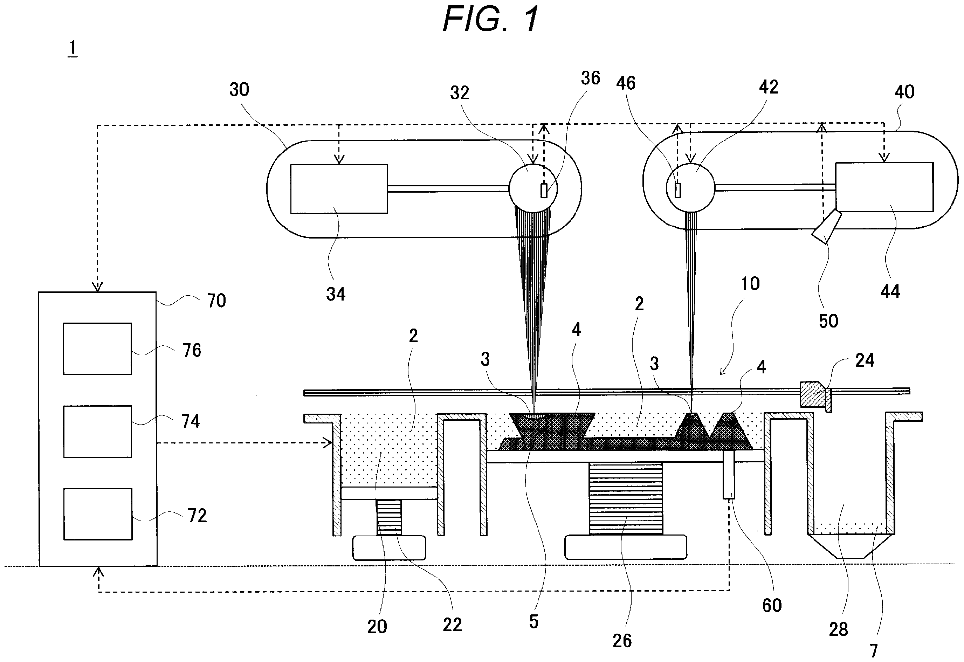

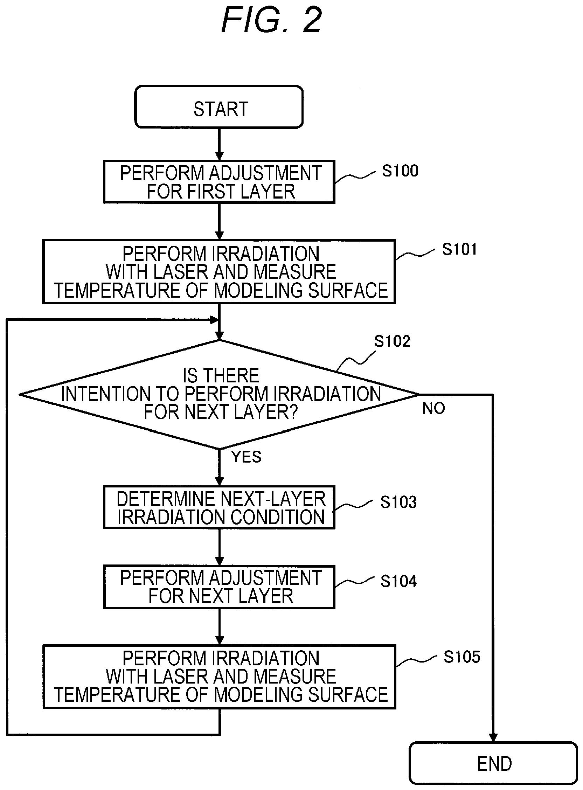

An embodiment of an additive modeling apparatus and a method of controlling the additive modeling apparatus according to the present invention will be described with reference to FIGS. 1 and 2. FIG. 1 is a schematic diagram illustrating a configuration of an additive modeling apparatus according to an embodiment.

In the following embodiment, a form of irradiating metal powder with laser light will be described, but the material that can be used in additive modeling in the present invention is not limited to the metal powder, and may include a metal alloy, a polymer, or ceramic powder. Examples of a modeling material include a stainless steel alloy, cobalt-chromium, an aluminum alloy, a titanium alloy, a nickel-based superalloy, and a cobalt-based superalloy.

In addition, a beam used to melt the material is not limited to a laser beam, and an electron beam can be used. In addition, the number of beams is not limited to two, and may be one or three or more.

First, the overall configuration of the additive modeling apparatus will be described with reference to FIG. 1.

An additive modeling apparatus 1 illustrated in FIG. 1 according to the present embodiment is an apparatus that models a modeled object 5 by layering a modeling material based on design data (CAD data) of the modeled object 5, and is an apparatus that manufactures the modeled object 5 by a metal layering modeling method.

The additive modeling apparatus 1 includes a powder supply device, laser systems 30 and 40, a control device 70, and the like, and temperature monitoring means for a modeled object.

The powder supply device is a device that supplies metal powder 2 to a modeling surface 4 in a modeling space 10. The powder supply device includes a supply tank 20 for holding the unused metal powder 2, a supply mechanism 22 that supplies the metal powder 2 in the supply tank 20 to a recoater 24, the recoater 24 that forms a powder layer (powder bed) made of the metal powder 2 for modeling on the modeling surface 4, a modeling surface up-down mechanism 26 that adjusts the position of the modeling surface 4, a collection tank 28 for collecting excess metal powder 7, and the like.

The laser systems 30 and 40 are devices that melt the metal powder 2 at a predetermined position (position corresponding to the shape of the modeled object 5) in the metal powder 2 supplied to the modeling surface 4.

In the present embodiment, the laser systems 30 and 40 have a configuration of having different outputs. The laser system 30 has an output higher than an output of the laser system 40 and has specifications in which high-speed scanning is possible. On the other hand, the laser system 40 has a lower output and more precise specifications than those of the laser system 30.

The laser system 30 includes a laser scanner 32 that emits laser for melting the metal powder 2 at a predetermined position and a laser oscillator 34 that generates a laser.

The laser scanner 32 is configured to be movable in an x-y plane parallel to a powder layer of the metal powder 2 formed on the modeling surface 4, and may adopt various known configurations movable in the x-y plane. The movement is not limited to the case of moving in the x-y plane, and the movement in the z direction toward or away from the powder layer can be made possible. In addition, it is also possible to adopt a configuration in which the powder layer is rotatable by 360 degrees about one vertical line perpendicular to the powder layer as a central axis.

The laser system 40 includes a laser scanner 42 that emits laser for melting the metal powder 2 and a laser oscillator 44 that generates laser.

The first thermometers 36 and 46 are thermometers that measure the temperature in the respective regions of the modeling surface 4, and measure the temperature change by continuously measuring the temperature in the respective regions of the modeling surface 4.

The first thermometer 36 is installed so that a measurement direction of the first thermometer 36 is coaxial with laser emitted from the laser scanner 32 of the laser system 30. For example, the first thermometer 36 can be set as a radiation thermometer that measures the intensity of infrared rays or visible rays radiated from an object and measures the temperature of the object. Preferably, it is possible to measure the temperature change of the modeling surface 4 after coagulation of the metal powder 2, not a portion of a molten pool 3 formed by melting the metal powder 2 by laser irradiation, at the timing before formation of the next layer.

It is also possible to measure the temperature change at the portion of the molten pool 3.

The first thermometer 46 is installed so that a measurement direction of the first thermometer 46 is coaxial with laser emitted from the laser scanner 42 of the laser system 40. The first thermometer 46 has the same specifications as those of the first thermometer 36 described above, and details thereof will be omitted.

In the present embodiment, a second thermometer 50 is attached to the laser oscillator 44 of the laser system 40. Similar to the first thermometers 36 and 46, the second thermometer 50 is a thermometer that measures the temperature in each region of the modeling surface 4, and measures the temperature change by continuously measuring the temperature in each region of the modeling surface 4. Similarly, preferably, it is possible to assume that the temperature change of the modeling surface 4 after coagulation of the metal powder 2, not a portion of a molten pool 3 formed by melting the metal powder 2 by laser irradiation, is measured at the timing before formation of the next layer.

The second thermometer 50 desirably has specifications capable of measuring the temperature of the modeling surface 4 after laser irradiation in a range wider than that of the first thermometers 36 and 46, more preferably after coagulation of the metal powder 2. For example, the second thermometer 50 can be set as a radiation thermometer that measures the temperature of an object by measuring the intensity of infrared rays or visible rays emitted from the object.

A third thermometer 60 is a thermometer that measures the temperature of the lower surface portion of the modeling space 10, and includes, for example, a thermocouple.

The temperature measurement results of the first thermometers 36 and 46, the second thermometer 50, and the third thermometer 60 are input to the control device 70.

The control device 70 is a device that controls the operations of the supply mechanism 22 of the powder supply device, the recoater 24, and the laser systems 30 and 40. The control device is configured by a computer including at least a CPU (processor), a memory (storage device) such as a ROM and a RAM, an external communication interface for a connection with the outside of the control device 70, and the like. The control device 70 realizes each function described later in a manner that the CPU performs an operation (data calculation and the like) in accordance with commands of a modeling condition program determined based on the three-dimensional shape of the modeled object 5 loaded into the storage device.

Control processing of the operation performed by the control device 70 may be integrated into one program, may be divided into a plurality of programs, or may be a combination thereof.

A portion or the entirety of the program may be implemented by dedicated hardware or may be modularized. Furthermore, various programs may be installed in each device by a program distribution server or an external storage medium.

Furthermore, independent devices are connected to each other via a wired or wireless network, or two or more programs may be integrated.

In the present embodiment, the control device 70 includes, as functional blocks thereof, an irradiation-region thermal conductivity analysis unit 72, a supply device control unit 74, and a laser system control unit 76. The irradiation-region thermal conductivity analysis unit 72 determines a laser irradiation condition for the next layer based on the temperature change of the modeling surface 4 after beam irradiation, which is input from the first thermometers 36 and 46 or the second thermometer 50. The supply device control unit 74 controls the operation of the powder supply device when the next layer is formed based on the laser irradiation condition determined by the irradiation-region thermal conductivity analysis unit 72. The laser system control unit 76 controls the operations of the laser systems 30 and 40 when the next layer is formed based on the laser irradiation condition determined by the irradiation-region thermal conductivity analysis unit 72.

In the irradiation-region thermal conductivity analysis unit 72 in the present embodiment, the temperature change of the modeling surface 4 after laser irradiation input from the first thermometers 36 and 46 or the second thermometer 50 is compared with the reference value, and the laser irradiation condition of the next layer can be determined based on the comparison result. A measurement value of the third thermometer 60 can also be used.

In particular, in the control device 70 in the present embodiment, for the purpose of stabilizing the molten state, improving the dimensional accuracy, and stabilizing the cooling rate, it is possible to determine at least one of conditions of the laser output, the laser scanning speed, and the laser hatching distance, as the laser irradiation conditions. In addition, as the laser irradiation conditions, the standby time until the next layer is irradiated, and the supply thickness of the metal powder 2 by the powder supply device can also be determined.

Furthermore, the control device 70 can analyze the thermal conductivity of the modeled object 5 from the measurement result of the temperature change of the modeling surface 4, which has been measured by the first thermometers 36 and 46, and the second thermometer 50 and the modeling volume of a certain number of layered layers from the front surface, and determine the laser irradiation condition for the next layer by using the thermal conductivity.

For example, the control device 70 can analyze the thermal conductivity of the modeled object 5 from the measurement result of the temperature change of the modeling surface 4 and the modeling volume of a certain number of layered layers from the front surface, and can determine the condition using the laser (laser system 40) having a smaller output at the time of laser irradiation of the next layer in order for the modeled object 5 to be modeled by reducing a heat input because an overmelted state due to heat from the previous layer is likely to occur in a region where the thermal conductivity is analyzed to be smaller than the reference value.

On the other hand, when laser irradiation is performed on the next layer in the region analyzed to have thermal conductivity that is equal to or greater than the reference value, the laser (laser system 30) having a larger output is used. At this time, the laser irradiation conditions such as the output, the scanning speed, the hatching distance, the standby time, and the supply thickness of the metal powder 2 can be determined so as to increase the amount of heat input, as the difference from the reference value increases.

Furthermore, the control device 70 can compare the measurement results of the temperature changes of the modeling surface 4, which have been measured by the first thermometers 36 and 46, and the second thermometer 50 with the reference value, and omit the descriptions of the formation of the next layer in the region in which the measurement result is higher than the reference value.

For example, in the region where the measurement result is higher than the reference value, that is, in a region where the thermal conductivity is poor, modeling can be performed by setting the powder spread thickness as a plurality of times (in a region in which the thermal conductivity is poor, one irradiation is skipped, and laser irradiation at a time of becoming 40 µm) of normal modeling (for example, thickness of 20 µm), performing change to the laser irradiation condition in which the plurality of times of powder thicknesses can be molted.

Next, a method of controlling the additive modeling apparatus 1 that manufactures the modeled object 5 by the additive modeling according to the present embodiment will be described with reference to FIG. 2. FIG. 2 is a flowchart illustrating a flow of control of the additive modeling apparatus.

First, the control device 70 starts processing and operates the powder supply device to perform adjustment for forming the first layer as illustrated in FIG. 2 (step S100). This Step S100 corresponds to a powder supply step of supplying the metal powder 2 to the modeling surface 4.

Then, the control device 70 controls the operation of the laser systems 30 and 40 to perform the laser irradiation under the initial condition, and causes the first thermometers 36 and 46 and the second thermometer 50 to continuously measure the temperature of the modeling surface 4 after the coagulation of the molten pool 3, and records the temperature change (Step S101).

This Step S101 corresponds to a laser irradiation step of melting the metal powder 2 at a portion forming the modeled object 5 in the metal powder 2 by irradiating the metal powder 2 supplied in the powder supply step with laser, and a temperature measurement step of measuring the temperature change of the modeling surface 4 after the beam irradiation in the laser irradiation step.

Then, the control device 70 determines whether or not the modeling of the modeled object 5 is not completed and there is a laser irradiation plan for the next layer (Step S102). When it is determined that there is the irradiation plan for the next layer, the process proceeds to Step S103. On the other hand, when it is determined that there is no irradiation plan, that is, when it is determined that the modeling of the modeled object has been completed, the processing is ended.

Then, the control device 70 determines the irradiation condition for the next layer planned to be adjusted in Step S104 to be executed the next, based on the temperature change of the modeling surface 4 after the beam irradiation, which has been measured in Step S101 (Step S103) .

This Step S103 corresponds to an irradiation condition determination step of determining the laser irradiation condition for the next layer. In the irradiation condition determination step, when it is determined that the temperature change is larger than the reference value in the measurement result in the temperature measurement step, it is possible to increase the heat input at the time of laser irradiation of the next layer of the region in accordance with the excess rate. When it is determined that the temperature change is equal to or less than the reference value, it is possible to reduce the heat input at the time of laser irradiation for the next layer in the region in accordance with the excess rate.

Then, the control device 70 operates the powder supply mechanism to perform adjustment for forming the next layer (Step S104). This Step S104 also corresponds to the powder supply step.

Then, the control device 70 controls the operation of the laser systems 30 and 40 to perform laser irradiation to be performed based on the condition determined in Step S103. The control device 70 causes the first thermometers 36 and 46 and the second thermometer 50 to continuously measure the temperature of the modeling surface 4 after the laser irradiation, and records the temperature change (Step S105). This Step S105 also corresponds to the laser irradiation step and the temperature measurement step.

Then, the process returns to Step S102, and the processing is continued until the entire laser irradiation plan is completed and the modeled object 5 is completed.

Next, the effect of the present embodiment will be described.

The additive modeling apparatus 1 in the present embodiment described above includes the powder supply device that supplies metal powder 2 to the modeling surface 4, the laser systems 30 and 40 that melt the metal powder 2 at a predetermined position in the metal powder 2 supplied to the modeling surface 4, the first thermometers 36 and 46 and the second thermometer 50 that measure the temperature change in each region of the modeling surface 4, and the control device 70 that controls the laser systems 30 and 40. The control device 70 determines a laser irradiation condition for a next layer, based on the temperature change after beam irradiation of the modeling surface 4.

According to the present invention, it is possible to reflect the temperature monitoring result of the modeling surface in the control. In particular, the temperature of the modeling surface increased by the laser irradiation for each region and the cooling rate thereof can be monitored, and the formation of the molten pool formed by the laser irradiation and the form in which the molten pool is solidified thereafter can be observed. Thus, in the modeling surface 4 in which the molten pool 3 is solidified, a region (region where the heat remains, region where the cooling rate is low) having poor heat conduction can be detected before modeling the next layer, and the irradiation condition can be changed based on the detection result. On the contrary, the condition can be changed to increase the amount of heat input in the region having the high thermal conductivity.

As a result, even in the modeled object 5 in which the area and shape of the laser irradiation region of each layer are different, it is possible to improve the dimension accuracy of the modeled object 5 as compared with the conventional art by optimizing the laser irradiation conditions in all layers during modeling and suppressing excessive melting, and it is possible to stabilize the modeling quality of the modeled object 5 as compared to the conventional technique by controlling the cooling rate. Thus, it is possible to perform the entire modeling with uniform quality.

Furthermore, the control device 70 analyze the thermal conductivity of the modeled object 5 from the measurement results of the temperature change of the modeling surface 4 measured by the first thermometers 36 and 46, and the second thermometer 50 and the modeling volume of a certain number of layered layers from the front surface, and determines the laser irradiation condition for the next layer by using the thermal conductivity. Therefore, it is possible to stabilize the molten state even in a region where the thermal conductivity is poor (narrow), and perform more stable modeling.

Furthermore, the control device 70 can stabilize the molten state, improve the dimensional accuracy, and stabilize the cooling rate by determining at least one of the laser output, the laser scanning speed, and the laser hatching distance as the laser irradiation conditions, and can greatly contribute to stable modeling.

The control device 70 can also stabilize the molten state, improve the dimensional accuracy, and stabilize the cooling rate by determining the standby time and the supply thickness of the metal powder 2 by the powder supply device as the laser irradiation conditions, and can greatly contribute to the stable modeling.

Furthermore, since the laser systems 30 and 40 include a plurality of lasers having different outputs, it is not necessary to adjust the laser output which is difficult to adjust even when changing the laser irradiation condition in accordance with the cooling state of the modeled object 5, and it is possible to efficiently perform modeling of the modeled object 5.

Furthermore, the control device 70 analyzes the thermal conductivity of the modeled object 5 from the measurement results of the temperature change of the modeling surface 4 and the modeling volume of a certain number of layered layers from the front surface. The control device 70 does not need to change the laser irradiation condition by using the laser having a smaller output at the time of laser irradiation for the next layer in the region where the thermal conductivity is analyzed to be smaller than the reference value or using the laser having a larger output at the time of laser irradiation for the next layer in the region where the thermal conductivity is analyzed to be equal to or greater than the reference value. Thus, it is possible to realize the modeling with higher efficiency.

In particular, the control device 70 can use the more appropriate laser irradiation condition by reducing or increasing the amount of the heat input of the next layer in accordance with the excess rate, and thus it is possible to realize the modeling with higher efficiency.

Furthermore, the control device 70 compares the measurement results of the temperature change of the modeling surface 4 measured by the first thermometers 36 and 46, and the second thermometer 50 with the reference value, and omits the formation of the next layer in the region in which the measurement result is higher than the reference value. Thus, it is possible to stabilize the state of heat release and to further improve the modeling accuracy.

### <Others>

The present invention is not limited to the above embodiment, and various modifications and applications are possible. The above-described embodiment is described in detail in order to explain the present invention in an easy-to-understand manner, and the above embodiment is not necessarily limited to a case including all the described configurations.

### Reference Signs List

- 1: additive modeling apparatus
- 2: metal powder
- 3: molten pool
- 4: modeling surface
- 5: modeled object
- 7: used metal powder
- 10: modeling space
- 20: supply tank (powder supply device)
- 22: supply mechanism (powder supply device)
- 24: recoater (powder supply device)
- 26: modeling tank (powder supply device)
- 28: collection tank
- 30: laser system (beam irradiation device)
- 32: laser scanner
- 34: laser oscillator
- 36: first thermometer (temperature measurement device)
- 40: laser system (beam irradiation device)
- 42: laser scanner
- 44: laser oscillator
- 46: first thermometer (temperature measurement device)
- 50: second thermometer (temperature measurement device)
- 60: third thermometer
- 70: control device
- 72: irradiation-region thermal conductivity analysis unit
- 74: supply-device control unit
- 76: laser-system control unit

## Claims

1. An additive modeling apparatus comprising:
a powder supply device that supplies powder to a modeling surface;
a beam irradiation device that melts powder at a predetermined position in the powder supplied to the modeling surface;
a temperature measurement device that measures a temperature change in each region of the modeling surface; and
a control device that controls the beam irradiation device,
wherein the control device determines a beam irradiation condition for a next layer, based on the temperature change after beam irradiation of the modeling surface.

2. The additive modeling apparatus according to claim 1, wherein the control device analyzes a thermal conductivity of a modeled object from a measurement result of the temperature change of the modeling surface, which has been measured by the temperature measurement device and a modeling volume of a certain number of layered layers from a front surface, and determines the beam irradiation condition for the next layer by using the thermal conductivity.

3. The additive modeling apparatus according to claim 1, wherein the control device determines at least one condition among an output of a beam, a scanning speed of the beam, and a hatching distance of the beam, as the beam irradiation condition.

4. The additive modeling apparatus according to claim 1, wherein the control device also determines a standby time and a supply thickness of the powder by the powder supply device, as the beam irradiation condition.

5. The additive modeling apparatus according to claim 1, wherein the beam irradiation device includes a plurality of beams having different outputs.

6. The additive modeling apparatus according to claim 5, wherein the control device analyzes a thermal conductivity of a modeled object from a measurement result of the temperature change of the modeling surface and a modeling volume of a certain number of layered layers from a front surface, and uses a beam having a smaller output at a time of beam irradiation of the next layer in a region where the thermal conductivity is analyzed to be smaller than a reference value.

7. The additive modeling apparatus according to claim 6, wherein the control device reduces heat input at the time of beam irradiation for the next layer in the region in accordance with an excess rate.

8. The additive modeling apparatus according to claim 5, wherein the control device analyzes a thermal conductivity of a modeled object from a measurement result of the temperature change of the modeling surface and a modeling volume of a certain number of layered layers from a front surface, and uses a beam having a larger output at a time of beam irradiation of the next layer in a region where the thermal conductivity is analyzed to be equal to or greater than a reference value.

9. The additive modeling apparatus according to claim 8, wherein the control device increases heat input at the time of beam irradiation for the next layer in the region in accordance with an excess rate.

10. The additive modeling apparatus according to claim 1, wherein the control device compares a measurement result of the temperature change of the modeling surface, which has been measured by the temperature measurement device, to a reference value, and omits formation of the next layer in a region where the measurement result is higher than the reference value.

11. A method of controlling an additive modeling apparatus that manufactures a modeled object by additive modeling, the method comprising:
a powder supply step of supplying powder to a modeling surface;
a beam irradiation step of melting powder at a portion forming the modeled object in the powder by irradiating the powder supplied in the powder supply step with a beam;
a temperature measurement step of measuring a temperature change of the modeling surface after the beam irradiation in the beam irradiation step; and
an irradiation condition determination step of determining a beam irradiation condition in a next layer, based on the temperature change after the beam irradiation of the modeling surface, which has been measured in the temperature measurement step.

12. The method of controlling an additive modeling apparatus according to claim 11, wherein in the irradiation condition determination step, when it is determined that the temperature change is equal to or less than a reference value in the measurement result in the temperature measurement step, a heat input at a time of beam irradiation of the next layer in the region is reduced in accordance with an excess rate.

13. The method of controlling an additive modeling apparatus according to claim 11, wherein in the irradiation condition determination step, when it is determined that the temperature change is greater than a reference value in the measurement result in the temperature measurement step, a heat input at a time of beam irradiation of the next layer in the region is increased in accordance with an excess rate.
